Europäisches Patentamt

European Patent Office

Office européen des brevets

(19)

(11) Veröffentlichungsnummer: **0 206 040**
**B1**

(12) # EUROPÄISCHE PATENTSCHRIFT

(45) Veröffentlichungstag der Patentschrift:
06.09.89

(51) Int. Cl.⁴: **C 08 J 5/18, B 65 D 65/42**

(21) Anmeldenummer: 86107671.9

(22) Anmeldetag: 05.06.86

(54) **Synthetisches Geschenkpapier.**

(30) Priorität: 14.06.85 DE 3521328

(43) Veröffentlichungstag der Anmeldung:
30.12.86 Patentblatt 86/52

(45) Bekanntmachung des Hinweises auf die Patenterteilung:
06.09.89 Patentblatt 89/36

(84) Benannte Vertragsstaaten:
BE DE FR GB IT NL

(56) Entgegenhaltungen:
DE-A- 3 328 260
DE-B- 2 814 311
FR-A- 2 505 251
GB-A- 924 461

(73) Patentinhaber: HOECHST AKTIENGESELLSCHAFT,
Postfach 80 03 20, D-6230 Frankfurt am Main 80 (DE)

(72) Erfinder: Crass, Günther, Bachstrasse 7,
D-6204 Taunusstein 4 (DE)
Erfinder: Hammerschmidt, Peter,
Münzenbergstrasse 20, D-6200 Wiesbaden (DE)
Erfinder: Bothe, Lothar, Dr., Am Heiligenhaus 9,
D-6500 Mainz-Gonsenheim (DE)

## Beschreibung

Die Erfindung betrifft ein synthetisches Papier aus einer opaken Folie, die im wesentlichen aus Polypropylen und Füllstoffen in Form von kleinen Teilchen besteht und durch biaxiales Strecken der extrudierten Folie in Längsrichtung und anschliessend in Querrichtung eine grosse Anzahl von Hohlräumen besitzt, wodurch ihre Dichte verringert ist.

Der Einsatz von bedruckten Geschenkpapieren ist weit verbreitet, wobei mit steigenden Anforderungen an das optische Erscheinungsbild immer höherwertige Produkte zum Einsatz kommen. Ebenfalls seit längerem bekannt sind Kunststofffolien als synthetische Papiere, die als wasserfeste Druckträger bei hochwertigen Druckerzeugnissen zum Einsatz kommen.

Folien der eingangs genannten Art sind aus der DE-B-28 14 311 bekannt. Die Opazität dieser Folien resultiert daher, dass sie eine grosse Anzahl von Hohlräumen (Vakuolen) besitzen, die beim Strecken der coextrudierten Folie entstanden sind. Beim Strecken wird nämlich die Polymermatrix an den Korngrenzen der mit dem Polypropylen unverträglichen organischen oder anorganischen Füllstoffe aufgerissen, was zur Entstehung der genannten Vakuolen in der Folie, das heisst zu freien (leeren oder ungefüllten) Räumen in der Folie führt (es versteht sich von selbst, dass diese Vakuolen oder Mikrohohlräume über das ganze Folienvolumen verteilt sind). Infolge der Brechung (Streuung) des Lichtes an diesen Hohlräumen zeigt die Folie eine opake (perlmuttartige) Oberfläche. Aufgrund der opaken oder perlmuttartigen Erscheinung haben diese Folien ein äusserst werbewirksames Aussehen. Da sie auch gut bedruckbar sind, werden sie vielseitig eingesetzt, insbesondere als Verpackungsfolie verschiedenster Art, wobei vor allem die Schokorigel-Verpackung zu nennen ist.

Folien dieser Art haben aber für den Einsatz als synthetisches Geschenkpapier bislang den Nachteil, dass ihre Oberfläche noch zu wenig glänzend ist und dass sich die Folie, wegen ihres hohen Rückstellvermögens, im Vergleich mit Papier relativ schlecht knicken lässt.

Der vorliegenden Erfindung lag daher die Aufgabe zugrunde, eine Kunststoffolie auf Basis von Polypropylen zu schaffen, die sich wegen ihres besonderen das ästhetische Empfinden ansprechenden optischen Erscheinungsbildes besser als die bislang bekannte Folie für den Einsatz als synthetisches Geschenkpapier eignet, die insbesondere eine stärker glänzende Oberfläche aufweist, die sich leichter und dauerhafter knicken und falzen lässt und die eine besonders niedrige Dichte besitzt.

Gelöst wird diese Aufgabe durch ein synthetisches Geschenkpapier der eingangs genannten Gattung, dessen kennzeichnenden Merkmale darin zu sehen sind, dass die Menge an Füllstoff, bezogen auf Polypropylen in der Basisschicht, 15 bis 30 Gew.-% beträgt, der eingesetzte Füllstoff eine mittlere Teilchengrösse von 2 bis 5 µm hat und die Folie um das 5- bis 7fache längsgestreckt und um das 8- bis 10fache quergestreckt ist, eine Dichte von maximal 0,65 g/cm³ aufweist, auf einer Folienoberfläche eine metallische Beschichtung mit einer Dicke von 5 bis 60 Nanometer aufweist und auf der metallischen Beschichtung oder auf der gegenüberliegenden Oberfläche eine vorzugsweise mehrfarbige Bedruckung zeigt.

Die Folie für das synthetische Geschenkpapier enthält eine relativ grosse Menge an Füllstoff. Es war überraschend, dass die so einfach erscheinende Massnahme der Erhöhung der Füllstoffmenge zu der angestrebten Absenkung der Dichte beiträgt, nachdem sich durch diese Massnahme nicht nur die Dichte der Polypropylen-Füllstoffmischung, aus der die Folie hergestellt wird, sondern auch der Grad der Dichteerniedrigung, das ist der prozentuale Unterschied der Dichtewerte der Polypropylen-Füllstoffmischung und der fertigen Folie, der üblicherweise bei 20 bis 40% liegt, deutlich erhöht. Es war ferner zu erwarten, dass eine Polypropylenfolie mit einem auf Kosten des Polymeranteils relativ hohen Füllstoffgehalt, wenn überhaupt, nur noch mit Schwierigkeiten herstellbar und insbesondere biaxial streckbar sein wird. Entgegen dieser Erwartung lässt sich die Folie für das synthetische Geschenkpapier überraschenderweise leicht herstellen und auch biaxial strecken. Wenn die Menge an Füllstoff zu niedrig ist, bezogen auf Polypropylen, wird die angestrebte niedrige Dichte nicht erreicht. Ist sie andererseits zu gross, kann die Folie bei den genannten Bedingungen nicht mehr gestreckt werden. Analoges gilt auch für die Teilchengrösse des pulverförmigen Füllstoffes. Neben den beiden Merkmalen, Füllstoffmenge und Füllstoffteilchengrösse, müssen auch die Längs- und Querstreckverhältnisse im angegebenen Bereich liegen, damit die angestrebte Folie erhalten wird.

Eine erfindungsgemäss besonders bevorzugte Ausführungsform des synthetischen Geschenkpapiers ist dadurch gekennzeichnet, dass der eingesetzte Füllstoff eine mittlere Teilchengrösse von 3 bis 4 µm hat und die Folie um das 5- bis 7fache längsgestreckt und um das 8- bis 10fache quergestreckt worden ist und eine Dichte von maximal 0,6 g/cm³ aufweist. Das synthetische Geschenkpapier hat bevorzugt eine Dichte von 0,4 bis 0,6 g/cm³.

Das synthetische Geschenkpapier ist in einer weiteren bevorzugten Ausgestaltungsform zusätzlich auf einer Oberfläche mit einer durch Vakuumaufdampfung aufgebrachten metallischen Beschichtung überzogen. Durch die metallische Beschichtung erhält das synthetische Geschenkpapier ein noch ansprechenderes Erscheinungsbild, insbesondere eine noch stärker glänzende Oberfläche. Die metallische Beschichtung besteht dabei aus einem der Metalle Gold, Silber, Kupfer, Aluminium oder Gemischen oder Legierungen von wenigstens zweien dieser Metalle, bevorzugt aus Aluminium. Sie weist eine Dicke im Bereich von 5 bis 60 nm auf. Damit die metallische Beschichtung dem synthetischen Geschenkpapier

einen gleichmässigen Oberflächenglanz verleiht, muss sie eine weitgehende Kontinuität besitzen und darf keine Inselstruktur haben. Eine Dicke von mindestens etwa 5 nm ist erforderlich, damit eine diskontinuierliche Inselstruktur zu einer kontinuierlichen Struktur wird.

Vom Gesichtspunkt der Transparenz beträgt die Dicke vorzugsweise nicht mehr als 60 nm. Die besonders geeignete Dicke der metallischen Schicht liegt im Bereich von 10 bis 30 nm.

Verfahren zum Aufbringen der beschriebenen metallischen Beschichtung sind bekannt, diese kann beispielsweise durch Vakuumabscheidung, Kathodenaufsprühung, Plasmaaufsprühung, Dampfphasenplattierung, stromfreie Plattierung, Elektroplattierung und Aufziehen entweder allein oder in Kombination ausgebildet werden. Das Vakuumabscheidungsverfahren wird besonders für technische Arbeitsgänge bevorzugt. Eine Folie, die eine im vorstehenden beschriebene metallische Beschichtung trägt, ist beispielsweise aus der DE-A-28 28 576 bekannt.

In einer weiteren bevorzugten Ausgestaltungsform trägt das synthetische Geschenkpapier bevorzugt auch noch eine Bedruckung, insbesondere eine mehrfarbige Bedruckung. Dadurch können weitere vorteilhafte Effekte im Hinblick auf die Verwendung als Geschenkpapier erzielt werden, insbesondere im Zusammenwirken mit der metallischen Beschichtung. Die Bedruckung kann entweder auf der metallischen Beschichtung aufgebracht sein, oder sie kann sich auf der der metallischen Beschichtung gegenüberliegenden Oberfläche des synthetischen Geschenkpapieres befinden. Um die Haftfestigkeit sowohl der Bedruckung als auch der metallischen Beschichtung auf dem synthetischen Geschenkpapier zu verbessern, werden während der Herstellung eine oder beide Oberflächen des synthetischen Geschenkpapiers einer Coronabehandlung unterworfen.

Die Gesamtdicke des synthetischen Geschenkpapiers liegt im Bereich von 25 bis 80 µm, bevorzugt von 40 bis 70 µm. Die Dicken der metallischen Beschichtung und der Bedruckung können gegenüber der Gesamtdicke des synthetischen Geschenkpapiers vernachlässigt werden.

Das Verfahren zur Herstellung des synthetischen Geschenkpapiers ist dadurch gekennzeichnet, dass man die Schmelze der das synthetische Geschenkpapier bildenden Polymermischung aus im wesentlichen Polypropylen und Füllstoffen, wobei die Menge an Füllstoff, bezogen auf Polypropylen, beträgt 15 bis 30 Gew.-% und der eingesetzte Füllstoff eine mittlere Teilchengrösse von 2 bis 5 µm, vorzugsweise 3 bis 4 µm hat, durch eine Flachdüse oder Runddüse extrudiert, die durch Extrusion erhaltene Folie durch Abkühlen verfestigt, anschliessend bei einer Temperatur von 120 bis 130 °C im Verhältnis von 5 bis 7:1 längsstreckt und bei einer Temperatur von 160 bis 170 °C im Verhältnis von 8 bis 10:1 querstreckt und die biaxial gestreckte Folie thermofixiert.

Als bevorzugtes Polypropylen für das synthetische Geschenkpapier wird im Rahmen der vorliegenden Erfindung ein isotaktisches Propylenhomopolymeres eingesetzt oder ein Copolymeres, das zum überwiegenden Anteil aus Propyleneinheiten zusammengesetzt ist. Solche Polymeren besitzen üblicherweise einen Schmelzpunkt von mindestens 140 °C, bevorzugt von 150 °C. Isotaktisches Polypropylen mit einem n-heptanlöslichen Anteil von weniger als 15 Gew.-%, Copolymere von Ethylen und Propylen mit einem Ethylengehalt von weniger als 10 Gew.-% und Copolymere von Propylen mit anderen Alphaolefinen mit 4 bis 8 Kohlenstoffatomen und mit einem Gehalt dieser Alphaolefine von weniger als 10 Gew.-% stellen typische Beispiele für das bevorzugte thermoplastische Polypropylen der Basisschicht dar.

Die bevorzugten thermoplastischen Polymeren haben zweckmässigerweise einen Schmelzflussindex im Bereich von 0,5 g/10 min bis 8 g/10 min bei 230 °C und 2,16 kp Belastung (DIN 53 735), insbesondere von 1,5 g/10 min bis 4 g/10 min.

Bei den Füllstoffen handelt es sich um anorganische oder organische, mit Polypropylen unverträgliche, pulverförmige Materialien. Anorganische Füllstoffe sind bevorzugt. Geeignete anorganische Füllstoffe sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Geeignete organische Füllstoffe sind beispielsweise Partikel aus Polymeren wie Polymethylemethacrylat, Polyethylacrylat oder Polyethylen, aus Polyamiden oder aus Polymeren auf Basis von Polyestern. Die Füllstoffmenge beträgt erfindungsgemäss 15 bis 30 Gew.-% bezogen auf das Gewicht des vorhandenen Polypropylens. Die (mittlere) Teilchengrösse des pulverförmigen Füllstoffes liegt erfindungsgemäss im Bereich von 2 bis 5 µm, vorzugsweise im Bereich von 3 bis 4 µm. Die Basisfolie (Basisschicht) kann zusätzlich auch zweckmässige Additive wie Antioxidantien, Antistatika, Farbstoffe und/oder Stabilisatoren in einer jeweils wirksamen Menge enthalten.

Zum biaxialen Strecken der Folie kann zunächst in Längsrichtung und anschliessend in Querrichtung oder zuerst in Querrichtung und dann in Längsrichtung gestreckt werden. Wesentlich ist, dass die Längs- und Querstreckung nacheinander und bei den angegebenen ausgewählten Temperaturen und Streckverhältnissen vorgenommen werden. Die Extrusion der das synthetische Geschenkpapier bildenden Mischung mittels einer Flachdüse, das Abkühlen der extrudierten Folie zu ihrer Verfestigung, das Wiedererhitzen der Folie auf die Strecktemperatur und die Längs- und Querstreckung werden in an sich bekannter Weise durchgeführt (vgl. DE-B- 28 14 311). Das Abkühlen der Flachfolie zwecks Verfestigung und ihr Wiedererhitzen auf Strecktemperatur wird mit Hilfe einer oder mehrerer Walzen vorgenommen, die auf einer entsprechenden Temperatur gehalten werden. Die Längsstreckung der Folie wird mit Hilfe zweier entsprechend dem angestrebten Streckverhältnis verschieden schnell laufender Walzenpaare durchgeführt und ihre Querstreckung mit Hilfe eines entsprechenden Kluppernrahmens. Es ist zweckmässig, die Folie nach der ersten Streckung abzukühlen und auf dem Weg zur zweiten Streckung wieder auf die erforderliche Strecktemperatur zu bringen.

An die Streckung der Folie schliesst sich ihre Thermofixierung (Wärmenachbehandlung) an. Diese wird bei einer Temperatur von vorzugsweise 150 bis 160 °C und einer Dauer von etwa 0,5 bis 10 s vorgenommen.

Es hat sich überraschenderweise gezeigt, dass das im vorstehenden in allen Einzelheiten beschriebene synthetische Geschenkpapier, dessen Dichte höchstens 0,65 g/cm$^3$ beträgt und normalerweise im Bereich von 0,4 bis 0,6 g/cm$^3$ liegt, sich besonders gut für den bestimmungsgemässen Einsatzzweck eignet, weil es sich besonders leicht und dauerhaft knicken und falzen lässt. Die Folie besitzt schon durch die ihr eigene Opazität ein das ästhetische Geschmacksempfinden angenehm ansprechendes und werbewirksames Aussehen, sie kann aber darüber hinaus noch mit Farbpigmenten versehen sein, wodurch ihr noch ein interessanteres Aussehen verliehen wird.

Anschliessend soll das erfindungsgemässe synthetische Geschenkpapier anhand von zwei Zeichnungen beispielhaft näher erläutert werden.

Figur 1 zeigt einen Querschnitt durch ein synthetisches Geschenkpapier, bei dem die Bedruckung auf der metallischen Beschichtung aufgebracht ist.

Figur 2 zeigt einen Querschnitt durch ein synthetisches Geschenkpapier, bei dem die Bedruckung auf der der metallischen Beschichtung gegenüberliegenden Oberfläche des synthetischen Geschenkpapiers aufgebracht ist.

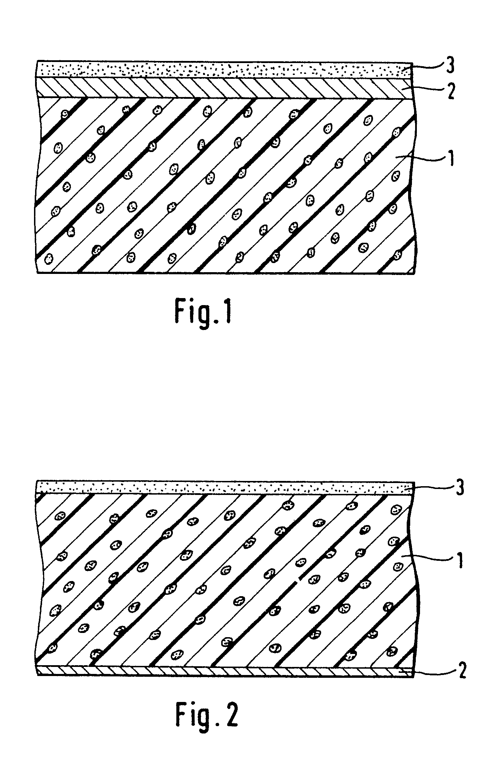

Durch die Bezugszeichen sind jeweils die mit Füllstoffen versehene Basisschicht 1 des Polypropylens, in der sich die Vakuolen gebildet haben, die metallische Beschichtung 2 und die Bedruckung 3 besonders hervorgehoben. Die nur auf Oberfläche beschichtete Folie nach Figur 1 ist bevorzugt nur einseitig coronabehandelt, während die Folie nach Fig. 2 bevorzugt mit beiden Oberflächen der Coronaentladung ausgesetzt wurde.

## Patentansprüche

1. Synthetisches Papier aus einer opaken Folie, die im wesentlichen aus Polypropylen und Füllstoffen in Form von kleinen Teilchen besteht und durch biaxiales Strecken der extrudierten Folie in Längsrichtung und anschliessend in Querrichtung eine grosse Anzahl von Hohlräumen besitzt, wodurch ihre Dichte verringert ist, dadurch gekennzeichnet, dass die Folie als synthetisches Geschenkpapier 15 bis 30 Gew.-%, bezogen auf das Polypropylen, an Füllstoff enthält, der eingesetzte Füllstoff eine Teilchengrösse von 2 bis 5 Mikrometer hat, die Folie um das 5fache bis 7fache in Längsrichtung und um das 8- bis 10fache in Querrichtung gestreckt worden ist, eine Dichte von maximal 0,65 g/cm$^3$ besitzt, auf einer Folienoberfläche eine metallische Beschichtung mit einer Dicke von 5 bis 60 Nanometer aufweist und auf der metallischen Beschichtung oder auf der gegenüberliegenden Oberfläche eine vorzugsweise mehrfarbige Bedruckung zeigt.

2. Synthetisches Papier nach Anspruch 1, dadurch gekennzeichnet, dass die Füllstoffteilchen aus Calciumcarbonat, Siliciumdioxid, Titandioxid oder Mischungen davon bestehen.

3. Synthetisches Papier nach Anspruch 1 oder 2, dadurch gekennzeichnet, dass die Folie Farbstoff enthält.

4. Synthetisches Papier nach einem der Ansprüche 1 bis 3, dadurch gekennzeichnet, dass die Folie Farbpigmente enthält.

5. Synthetisches Papier nach einem der Ansprüche 1 bis 4, dadurch gekennzeichnet, dass die metallische Beschichtung aus Gold, Silber, Kupfer, Aluminium oder Gemischen oder Legierungen aus wenigstens zwei dieser Metalle besteht.

6. Synthetisches Papier nach einem der Ansprüche 1 bis 5, dadurch gekennzeichnet, dass es eine Dicke von 25 bis 80, bevorzugt 40 bis 70 Mikrometer aufweist.

7. Synthetisches Geschenkpapier nach einem der Ansprüche 1 bis 6, dadurch gekennzeichnet, dass es eine Dichte von 0,4 bis 0,6 g/cm$^3$ aufweist.

8. Synthetisches Geschenkpapier nach einem der Ansprüche 1 bis 7, dadurch gekennzeichnet, dass die Dicke der metallischen Beschichtung im Bereich von 10 bis 30 Nanometer liegt.

9. Verwendung der opaken Folie nach einem der vorhergehenden Ansprüche als synthetisches Geschenkpapier.

## Revendications

1. Papier synthétique constitué d'une feuille opaque, qui est composée essentiellement de polypropylène et de charges sous forme de petites particules et qui possède par étirage biaxial de la feuille extrudée dans le sens longitudinal, puis dans le sens transversal, un grand nombre de cavités, grâce à quoi sa densité est abaissée, caractérisé en ce que la feuille, en tant que papier synthétique pour cadeaux, contient 15 à 33% en poids de charges par rapport au polypropylène, en ce que la charge utilisée a une taille de particules de 2 à 5 micromètres, en ce que la feuille a été étirée de 5 à 7 fois dans le sens longitudinal et de 8 à 10 fois dans le sens transversal, possède une densité de 0,65 g/cm$^3$ au maximum, présente sur une face de la feuille une enduction métallique d'une épaisseur de 5 à 60 nanomètres et présente sur l'enduction métallique ou sur la face opposée une impression de préférence polychrome.

2. Papier synthétique suivant la revendication 1, caractérisé en ce que les particules de charge sont constituées de carbonate de calcium, de bioxyde de silicium, de bioxyde de titane ou de mélanges de ceux-ci.

3. Papier synthétique suivant les revendications 1 ou 2, caractérisé en ce que la feuille contient un colorant.

4. Papier synthétique suivant l'une des revendications 1 à 3, caractérisé en ce que la feuille contient des pigments colorés.

5. Papier synthétique suivant l'une des revendications 1 à 4, caractérisé en ce que l'enduction métallique est constituée d'or, d'argent, de cuivre, d'aluminium ou de mélanges ou d'alliages d'au moins deux de ces métaux.

6. Papier synthétique suivant l'une des revendications 1 à 5, caractérisé en ce qu'il présente une épaisseur de 25 à 80, de préférence de 40 à 70 micromètres.

7. Papier synthétique pour cadeaux suivant l'une des revendications 1 à 6, caractérisé en ce qu'il présente une densité de 0,4 à 0,6 g/cm³.

8. Papier synthétique pour cadeaux suivant l'une des revendications 1 à 7, caractérisé en ce que l'épaisseur de l'enduction métallique est dans le domaine de 10 à 30 nanomètres.

9. Utilisation de la feuille opaque suivant l'une des revendications précédentes comme papier synthétique pour cadeaux.

## Claims

1. Synthetic paper comprised of an opaque film which essentially consists of polypropylene and fine-particulate fillers and which, due to biaxial orienting of the extruded sheet in the longitudinal direction and subsequently in the transverse direction, possesses a great number of cavities so that its density is reduced, characterized in that the film, as a synthetic gift paper, contains 15 to 30% by weight, relative to the polypropylene, of filler, that the filler used has an average particle size of 2 to 5 μm, that the film is stretched by a factor of 5 to 7 in the longitudinal direction and by a factor of 8 to 10 in the transverse direction and has a maximum density of 0.65 g/cm³, that a metallic coating having a thickness of 5 to 60 nm is provided on one film surface and that a preferably multicolored print is present either on the metallic coating or on the opposite film surface.

2. Synthetic paper as claimed in claim 1, characterized in that the filler particles comprise calcium carbonate, silicon dioxide, titanium dioxide or mixtures thereof.

3. Synthetic paper as claimed in claim 1 or 2, characterized in that a dye is contained in the film.

4. Synthetic paper as claimed in any of claims 1 to 3, characterized in that colored pigments are contained in the film.

5. Synthetic paper as claimed in any of claims 1 to 4, characterized in that the metallic coating consists of gold, silver, copper, aluminium or mixtures or alloy of at least two of these metals.

6. Synthetic paper as claimed in any of claims 1 to 5, characterized in that it has a thickness of 25 to 80 μm, preferably of 40 to 70 μm.

7. Synthetic gift paper as claimed in any of claims 1 to 6, characterized in that it has a desity of 0.4 to 0.6 g/cm³.

8. Synthetic gift paper as claimed in any of claims 1 to 7, characterized in that the metallic coating has a thickness in the range of 10 to 30 nm.

9. Use of the opaque film as claimed in any of the preceding claims as a synthetic gift paper.

1 / 1

Fig.1

Fig.2